# EUROPEAN PATENT APPLICATION

(11) **EP 1 413 389 A1**
(43) Date of publication of application: **28.04.2004**
(21) Application number: 03023589.9
(22) Date of filing: 16.10.2003
(51) Int. Cl.: B23Q 1/38

(54) **Machine tool comprising a hydrostatic slideway**

(30) Priority: 25.10.2002 JP 2002310445
(71) Applicant: Mori Seiki Co., Ltd., Yamatokoriyama-shi, Nara 639-1160 (JP)
(72) Inventor: Kawahara, Kenichi, Yamatokoriyama-shi Nara 639-1160 (JP); Saraie, Hidenori, Yamatokoriyama-shi Nara 639-1160 (JP); Sato, Chuichi, Kanagawa 252-0826 (JP)
(74) Representative: Reinhard - Skuhra - Weise & Partner GbR

(57) **Abstract**

A machine tool (1) is provided in which a movable member can be moved in an optimum state according to an axial traverse mode. A vertical machining center as the machine tool includes a column (20) provided upright on a bed (10), a spindle head (30) supported on a front face of the column, a saddle provided in front of the column on the bed, and a table (50) provided on the saddle (40). The saddle and the table are respectively guided in their movement directions by hydrostatic slideways. When the saddle and the table are moved in a so-called cutting feed mode, pressurized oil is automatically supplied to the respective hydrostatic slideways at a lower pressure. When the saddle and the table are moved in a so-called rapid traverse mode, the pressurized oil is automatically supplied to the respective hydrostatic slideways at a higher pressure.

## Description

### BACKGROUND OF THE INVENTION

### Field of the Invention

The present invention relates to a machine tool (e.g., a machining center, a lathe or a grinder) which comprises a hydrostatic slideway for guiding a movable member such as a spindle head or a table for movement of the movable member, the hydrostatic slideway including opposed slideways between which a pressurized fluid such as pressurized oil or pressurized air is supplied.

### Description of Related Art

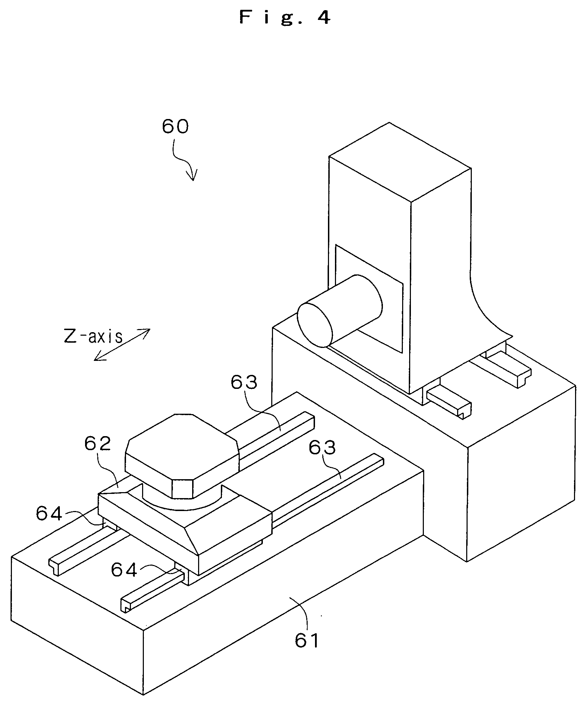

In a horizontal machining center 60 as shown in Fig. 4, a table 62 on which a workpiece is fixed is provided on a bed 61 with the intervention of a hydrostatic slideway for reciprocal movement thereof along the Z-axis. Though not shown, a reciprocal drive mechanism for moving the table 62 back and forth along the Z-axis includes a ball thread supported by the bed 61 for fixed-point rotation, a ball nut attached to the table 62 in threading engagement with the ball thread, and a motor for rotatively driving the ball thread.

The hydrostatic slideway includes slide rails 63 attached to the bed 61 and each defining a stationary side slideway, and slide guides 64 attached to the table 62 and each defining a movable side slideway. The slideways on the slide guides 64 each have a pocket into which pressurized oil is constantly supplied at a predetermined pressure. Thus, the table 62 (slide guides 64) is levitated above the slide rails 63 to suppress a sliding resistance occurring between the table 62 (slide guides 64) and the slide rails 63, whereby the table 62 is smoothly moved back and forth along the slide rails 63, (see, for example, Japanese Examined Patent Publication No. 46-28578 (1971)).

Where the suppression of the sliding resistance of the table 62 (slide guides 64) with respect to the slide rails 63 is achieved by levitating the table 62 (slide guides 64) above the slide rails 63 as described above, the table 62 can smoothly be moved along the slide rails 63. This is suitable for a so-called rapid traverse mode in which the table 62 is moved without performing a workpiece machining operation.

However, the levitation of the table 62 (slide guides 64) above the slide rails 63 for the suppression of the sliding resistance of the table 62 (slide guides 64) reduces the rigidity of the table 62 provided on the bed 61. In a so-called cutting feed mode in which the table 62 is moved while the workpiece fixed on the table 62 is machined, the attitude of the table 62 is changed due to a change in the magnitude of a load applied onto the table 62, thereby reducing a workpiece machining accuracy.

It is therefore an object of the present invention to provide a machine tool in which a movable member can be moved in an optimum state according to an axial traverse mode.

### SUMMARY OF THE INVENTION

According to the present invention to achieve the aforesaid object, there is provided a machine tool, which comprises a hydrostatic slideway for guiding a movable member for movement of the movable member, the hydrostatic slideway comprising opposed slideways between which pressurized fluid is supplied, wherein the pressurized fluid is supplied to the hydrostatic slideway at a lower pressure (a first pressure) when the movable member is moved during a workpiece machining operation, wherein the pressurized fluid is supplied to the hydrostatic slideway at a higher pressure(a second pressure higher than the first pressure) when the movable member is moved without performing the workpiece machining operation.

With this arrangement, the pressurized fluid is supplied to the hydrostatic slideway at the lower pressure in a so-called cutting feed mode in which the movable member is moved while the workpiece machining operation is performed in the machine tool. Therefore, a gap defined between the opposed slideways of the hydrostatic slideway is reduced, so that the reduction in the rigidity of the movable member is suppressed. Thus, the change in the attitude of the movable member is suppressed, thereby improving a workpiece machining accuracy.

In a so-called rapid traverse mode in which the movable member is moved without performing the workpiece machining operation, the pressurized fluid is supplied to the hydrostatic slideway at the higher pressure. Therefore, the gap defined between the opposed slideways of the hydrostatic slideway is increased. Thus, a sliding resistance occurring between the slideways of the hydrostatic slideway is reduced, so that the movable member guided by the hydrostatic slideway can smoothly and quickly be moved.

This arrangement makes the machine tool more convenient, because an operator does not have to care the axial traverse mode of the movable member to ensure that the movable member can be moved in an optimum state according to the axial traverse mode.

In the inventive machine tool, when a command for specifying the pressure of the pressurized fluid to be supplied to the hydrostatic slideway is issued, the pressurized fluid is forcibly supplied to the hydrostatic slideway at the specified pressure. In this case, the supply pressure of the pressurized fluid can more flexibly be set for the axial traverse mode. For example, a machining program is programmed so as to issue a command for supplying the pressurized fluid at a higher pressure when it is desired to smoothly move the movable member with a relatively small load applied thereto in a finishing operation. Thus, the movable member can smoothly be moved even in the cutting feed mode like in the rapid traverse mode.

The foregoing and other objects, features and effects of the present invention will become more apparent from the following description of the preferred embodiments with reference to the attached drawings.

### BRIEF DESCRIPTION OF THE DRAWINGS

Fig. 1 is a perspective view illustrating a vertical machining center as a machine tool according to one embodiment of the present invention;
Fig. 2 is a diagram illustrating in detail a hydrostatic slideway which guides a table and a saddle in the vertical machining center;
Figs. 3A and 3B are diagrams illustrating the arrangements of pockets provided in the hydrostatic slideway; and
Fig. 4 is a schematic perspective view illustrating a conventional horizontal machining center.

### DESCRIPTION OF THE PREFERRED EMBODIMENTS

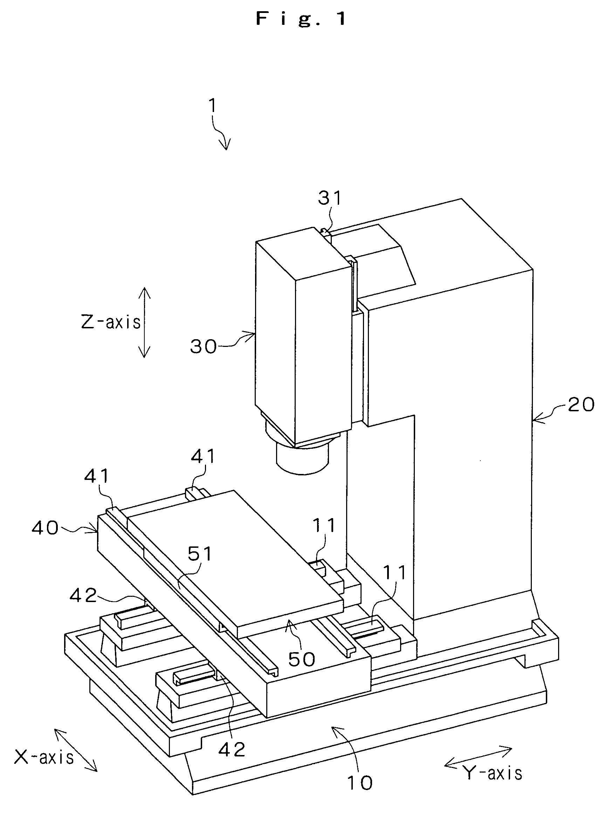

An embodiment of the present invention will hereinafter be described with reference to the attached drawings. As shown in Fig. 1, a machine tool 1 is a vertical machining center which includes a column 20 disposed upright on a rear portion of a bed 10, a spindle head 30 supported on a front face of the column 20 in a vertically movable manner, a saddle 40 provided in front of the column 20 on the bed 10 and movable forward and rearward (along the Y-axis), and a table 50 provided on the saddle 40 and movable laterally (along the X-axis).

The spindle head 30, the saddle 40 and the table 50 as movable members are respectively guided in their movement directions by hydrostatic slideways each including a movable side slideway and a stationary side slideway engaged with each other. A hydraulic pressure applying unit supplies pressurized oil into a gap defined between the slideways to suppress a sliding resistance occurring between the slideways.

The spindle head 30, the saddle 40 and the table 50 are respectively moved along the Z-axis, the Y-axis and the X-axis by movement mechanisms which, though not shown, each include a ball thread supported by the column 20, the bed 10 or the saddle 40 for fixed-point rotation, a drive motor for rotating the ball thread, and a ball nut attached to the spindle head 30, the saddle 40 or the table 50 in threading engagement with the ball thread. The ball thread is rotated by the drive motor to move the spindle head 30, the saddle 40 or the table 50 along the Z-axis, the Y-axis or the X-axis, respectively.

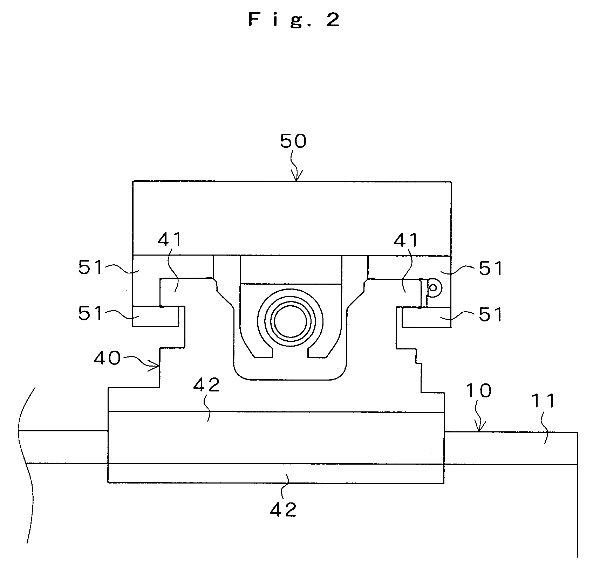

As shown in Figs. 1 and 2, the hydrostatic slideway for guiding the saddle 40 along the Y-axis includes slide rails 11 provided on the bed 10 and each defining a stationary side slideway, and slide guides 42 provided on the saddle 40 in engagement with the slide rails 11 and each defining a movable side slideway. The hydrostatic slideway for guiding the table 50 along the X-axis includes slide rails 41 provided on the saddle 40 and each defining a stationary side slideway, and slide guides 51 provided on the table 50 in engagement with the slide rails 41 and each defining a movable side slideway.

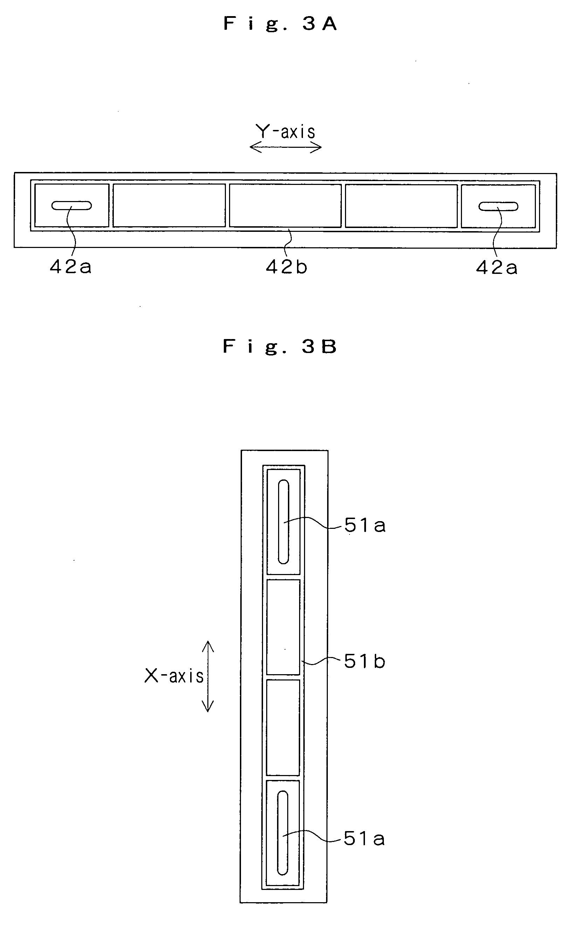

As shown in Fig. 3A, the movable side slideways of the slide guides 42 on the saddle 40 each have pockets 42a respectively provided in opposite end portions thereof with respect to a sliding direction thereof, and an oil channel 42b surrounding the pockets 42a. As shown in Fig. 3B, the movable side slideways of the slide guides 51 on the table 50 each have pockets 51a respectively provided in opposite end portions thereof with respect to a sliding direction thereof, and an oil channel 51b surrounding the pockets 51a. The pressurized oil is supplied into the respective pockets 42a, 51a.

Where the table 50 and the saddle 40 are moved along the X-axis and the Y-axis, respectively, while a workpiece fixed to the table 50 is machined with the use of a tool fixed to a spindle (i.e., the table 50 and the saddle 40 are moved in a cutting feed mode specified by an NC-code such as "G01", "G02" or "G03" in a machining program) , the pressurized oil is automatically supplied into the pockets 42a and the pockets 51a at a lower pressure (e.g., 0.5 MPa). Where the table 50 and the saddle 40 are simply moved along the X-axis and the Y-axis, respectively, without machining the workpiece attached to the table 50 (i.e., the table 50 and the saddle 40 are moved in a rapid traverse mode specified by an NC-code such as "G00" in the machining program) , the pressurized oil is automatically supplied into the pockets 42a and the pockets 51a at a higher pressure (e.g., 1.0 MPa).

Where the pressures of the pressurized oil supplied to the respective hydrostatic slideways are individually specified, for example, by utilizing an M-code or the like in the machining program, the pressurized oil is forcibly supplied into the pockets 42a and the pockets 51a at the specified pressures irrespective of whether the axial traverse mode of the table 50 and the saddle 40 is the cutting feed mode or the rapid traverse mode.

Where the table 50 and the saddle 40 are moved in the cutting feed mode in the machine tool 1, the pressurized oil is supplied to the respective hydrostatic slideways at the lower pressure (0.5 MPa). Therefore, gaps defined between the slideways of the respective hydrostatic slideways (between the slide rails 41 and the slide guides 51 and between the slide rails 11 and the slide guides 42) are reduced. That is, the levitation of the table 50 above the saddle 40 and the levitation of the saddle 40 above the bed 10 are reduced, so that the reduction in the rigidities of the table 50 and the saddle 40 is suppressed. Thus, the changes in the attitudes of the table 50 and the saddle 40 during the movement are suppressed, thereby improving the workpiece machining accuracy.

On the other hand, where the table 50 and the saddle 40 are moved in the rapid traverse mode, the pressurized oil is supplied to the respective hydrostatic slideways at the higher pressure (1.0 MPa). Therefore, the gaps defined between the slideways of the respective hydrostatic slideways (between the slide rails 41 and the slide guides 51 and between the slide rails 11 and the slide guides 42) are increased. Accordingly, sliding resistances between the slideways of the respective hydrostatic slideways (between the slide rails 41 and the slide guides 51 and between the slide rails 11 and the slide guides 42) are reduced. Thus, the table 50 and the saddle 40 guided by the respective hydrostatic slideways can smoothly and quickly be moved as in a machine tool including the conventional hydrostatic slideways.

Hence, there is no need for specifying the pressures of the pressurized oil to be supplied to the respective hydrostatic slideways according to the axial traverse mode of the table 50 and the saddle 40 when the machining program is prepared. Further, the table 50 and the saddle 40 can respectively be moved in optimum states according to the axial traverse mode. This makes the machine tool 1 very convenient.

When the pressures of the pressurized oil to be supplied to the respective hydrostatic slideways are specified in the machining program in the machine tool 1, the pressurized oil is supplied into the pockets 42a and the pockets 51a at the specified pressures. Therefore, the supply pressure of the pressurized fluid can more flexibly be set for the axial traverse mode. Where it is desired that the table 50 and the saddle 40 are moved smoothly with relatively small loads applied thereto in a finishing operation, or where the workpiece fixed to the table 50 has a greater weight, for example, a machining program is programmed so as to issue a command for supplying the pressurized fluid to the hydrostatic slideways at a higher pressure. Thus, the table 50 and the saddle 40 can smoothly be moved even in the cutting feed mode like in the rapid traverse mode.

In the embodiment described above, the pressures of the pressurized oil supplied to the hydrostatic slideways are set at 0.5 Mpa in the cutting feed mode and at 1.0 MPa in the rapid traverse mode. The supply pressures of the pressurized oil are not limited those described above, but may properly be determined in consideration of the rigidities and movement speeds of the table 50 and the saddle 40.

The embodiment described above employs the pressurized oil as the pressurized fluid to be supplied to the hydrostatic slideways for guiding the spindle head 30, the saddle 40 and the table 50 in their movement directions, but the pressurized fluid is not limited to the pressurized oil. Pressurized air may be employed instead of the pressurized oil for the hydrostatic slideways.

In the embodiment described above, the hydrostatic slideway for guiding the saddle 40 includes the slide rails 11 provided on the bed 10 and the slide guides 42 provided on the saddle 40, and the hydrostatic slideway for guiding the table 50 includes the slide rails 41 provided on the saddle 40 and the slide guides 51 provided on the table 50. However, the arrangements for the hydrostatic slideways are not limited to those described above. The hydrostatic slideways may be constituted by slide guides provided on the bed 10 and slide rails provided on the saddle 40, and by slide guides provided on the saddle 40 and slide rails provided on the table 50. The present invention is, of course, applicable to a machine tool employing such hydrostatic slideways.

The aforesaid embodiment of the present invention is directed to the vertical machining center including the hydrostatic slideway for guiding the saddle 40 and the hydrostatic slideway for guiding the table 50. However, the movable member to be guided by the hydrostatic slideway is not limited to the saddle and the table. The present invention is applicable to a hydrostatic slideway for guiding a column, a spindle head or a like movable member. This arrangement also provides the same effects. Therefore, the application of the present invention is not limited to the vertical machining center, but the present invention is applicable to any of various machine tools such as horizontal machining centers, lathes and grinders, in which a movable member is guided by a hydrostatic slideway.

While the present invention has been described in detail by way of the embodiment thereof, it should be understood that the foregoing disclosure is merely illustrative of the technical principles of the present invention but not limitative of the same. The spirit and scope of the present invention are to be limited only by the appended claims.

## Claims

1. A machine tool comprising a hydrostatic slideway for guiding a movable member for movement of the movable member, the hydrostatic slideway comprising opposed slideways between which pressurized fluid is supplied, wherein the pressurized fluid is supplied to the hydrostatic slideway at a first pressure when the movable member is moved during a workpiece machining operation, wherein the pressurized fluid is supplied to the hydrostatic slideway at a second pressure higher than the first pressure when the movable member is moved without performing the workpiece machining operation.

2. A machine tool as set forth in claim 1, wherein, when a command for specifying the pressure of the pressurized fluid to be supplied to the hydrostatic slideway is issued, the pressurized fluid is forcibly supplied to the hydrostatic slideway at the specified pressure.
